# EUROPEAN PATENT SPECIFICATION

(11) **EP 1 536 686 B1**
(45) Date of publication and mention of the grant of the patent: **17.03.2010**
(21) Application number: 03749362.4
(22) Date of filing: 02.09.2003
(51) Int. Cl.: A01N 57/20

(54) **PROCESS FOR THE PREPARATION OF SODIUM GLYPHOSATE COMPOSITION**
VERFAHREN ZU HERSTELLUNG EINER NATRIUMGLYPHOSAT-ZUSAMMENSETZUNG
PROCÉDÉ DE PREPARATION D'UNE COMPOSITION A BASE DE GLYPHOSATE DE SODIUM

(30) Priority: 31.08.2002 US 407378 P
(43) Date of publication of application: 08.06.2005
(73) Proprietor: Monsanto Technology LLC, St. Louis, Missouri 63167 (US)
(72) Inventor: MASSMANN, Brent, D., Ballwin, MO 63129 (US); WANG, John, T., St. Louis, MO 63129 (US); CAMPBELL, Dwane, H., Wildwood, MO 63005 (US)
(74) Representative: Bosch, Henry
(86) International application number: PCT/US2003/027526
(87) International publication number: WO 2004/103076

(56) References cited:
- EP-A- 0 378 985
- WO-A-01/08492

## Description

### FIELD OF THE INVENTION

The present invention relates to preparation of a herbicidal formulation useful in agriculture and in other situations where control of weeds or other vegetation is desired. In particular, it relates to a continuous process for preparing a herbicidal paste containing as an active ingredient the sodium salt of N-phosphonomethylglycine (glyphosate). According to the process of the present invention, particulate glyphosate acid, sodium hydroxide and water react to form sodium glyphosate paste, the paste being suitable for downstream processing to prepare a dry water-soluble granular herbicidal composition further containing one or more adjuvant(s) such as a surfactant. In one embodiment of the process, a surfactant is present in the reaction mixture to increase the reaction rate and enhance the physical properties of the resulting product.

### BACKGROUND OF THE INVENTION

N-phosphonomethylglycine [PO(OH)₂CH₂NHCH₂COOH], commonly referred to as glyphosate acid or simply glyphosate, is well known in the art as a highly effective herbicide. It is also known that glyphosate, an organic acid, has relatively low solubility in water. Thus, glyphosate is typically formulated as a water-soluble salt, particularly as the monoisopropylamine (IPA) salt to kill or control weeds or plants. Glyphosate salt is sold commercially as an aqueous concentrate or a dry salt by Monsanto Company of St. Louis, MO (U.S.A.), under the registered trademark ROUNDUP.

Various salts of glyphosate, methods for preparing salts of glyphosate, formulations of glyphosate and methods of use for killing and controlling weeds and plants are disclosed in U.S. Patent Nos. 3,799,758 and 4,405,531 issued to John E. Franz. Other U.S. Patents which disclose salts of glyphosate include U.S. Patent No. 4,315,765 issued to George B. Large, U.S. Patent Nos. 4,507,250 and 4,397,676 issued to Izak Bakel, U.S. Patent No. 4,481,026 issued to Michael P. Prisbylla and U.S. Patent No. 4,140,513 issued to Erhard J. Prill. All of the foregoing patents are incorporated herein by reference, in their entireties.

ROUNDUP brand herbicide is sold as a water-soluble liquid concentrate. However, efforts have recently been made in the art to develop water-soluble dry glyphosate herbicide formulations which have the equivalent efficacy of ROUNDUP. Reasons underlying efforts to develop water-soluble dry glyphosate herbicide formulations include cost savings in connection with the packaging, shipment and storage of a solid formulation versus a liquid. As can be appreciated, aqueous concentrates include a significant amount of water that adds to the size and weight of packaging containers and increases costs associated with post-manufacture delivery of the product to market. Less readily apparent benefits of making a water-soluble, dry/solid glyphosate formulation, such as a granular formulation, include superior handling characteristics (e.g., controlled spillage) and the expectation that such formulations will be substantially lighter and less awkward to transport (and often hand carry) thereby making the product better suited for use in remote geographic locations. Making a dry/solid glyphosate formulation, however, entails overcoming inherent disadvantages relating principally to the increased production cost and comparative complexity of compounding a solid product from a combination of liquid and solid components rather than making a product in solution from the same components.

Several methods for making a solid, water-soluble, glyphosate salt-containing composition are known. For example, U.S. Patent No. 5,047,079 issued to Djafar, discloses a method for preparing a phytotoxic composition comprising admixing highly hygroscopic IPA salt of glyphosate acid with a molten surfactant to form a matrix, the surfactant being a solid at ambient temperatures.

U.S. Pat. No. 5,266,553 to Champion et al. discloses a process for preparing a dry water-soluble salt of a herbicide having a carboxylic acid functionality, wherein a solution or slurry of the salt is prepared by reacting the herbicide in acid form with a sufficient amount of a neutralizing base selected from the group consisting of ammonia, an alkylamine, a hydroxyalkylamine, an alkaline salt of an alkali metal and combinations thereof and in the presence of water to neutralize the herbicide by about 98 to about 100 mole percent. The solution or slurry is then dried. The process is primarily directed to ammonium and alkylammonium salts of substituted benzoic acid and phenoxy-substituted carboxylic acid herbicides, but the process is said to be useful also for salts of glyphosate.

French Patent Publication No. 2.692.439 assigned to Productos Osa SACIFIA, generally describes a phytotoxic preparation comprising the mono-ammonium salt of glyphosate acid as a powder or granule in combination with a wetting agent, surfactant and/or a pulverulent additive. As exemplified in the reference, the mono-ammonium salt is derived from reacting glyphosate acid with ammonium bicarbonate.

U.S. Patent No. 5,324,708 issued to Moreno, et. al. discloses a composition and related methods for preparing and using a non-hygroscopic mono-ammonium glyphosate salt such as the mono-isopropylammonium salt of glyphosate and the mono-isopropylammonium salt of (3-amino-3-carboxypropyl)-methane phosphonic acid in dry powder form.

PCT application Publication No. WO 94/10844, discloses a dry glyphosate composition is disclosed in which glyphosate acid is admixed with, inter alia, an inorganic or organic, non-caustic base material such as di-ammonium phosphate or a basic guanidine salt such as guanidinium acetate.

EPO application Publication No. 0 394 211, discloses an invention comprising a dry pesticidal composition and related methods for use and production. More particularly, the invention relates to the enhanced solubility of the pesticidal composition as achieved by the addition of an effective amount of an organosilicone block copolymer or a fluorocarbon wetting agent.

PCT application Publication No. WO 90/07275, discloses an invention by which granular, water-soluble glyphosate compositions are made by admixing, pan granulation, drying, spraying and extrusion.

PCT application Publication No. WO 92/12637 discloses an invention relating to a dry, water-soluble glyphosate including a composition comprising substantially non-reacted glyphosate, an acid acceptor such as sodium acetate and a liquid or solid surfactant.

Ammonium glyphosate has been the primary salt of choice in the preparation of dry glyphosate herbicide formulations. Ammonium glyphosate is the preferred salt for use in preparing dry glyphosate formulations for a number of reasons, but perhaps mainly for the reason that ammonium glyphosate is relatively non-hygroscopic. By contrast, salts favored for preparation of aqueous formulations, such as the IPA salt or the trimethylsulfonium salt, are very difficult to dry down to a crystalline state and, once dry, have a strong tendency to reabsorb water. Commercial herbicides in the form of dry water-soluble granules containing ammonium glyphosate together with a liquid surfactant include ROUNDUP Dry, ROUNDUP Max and RIVAL herbicides, marketed by Monsanto Company in several countries.

PCT application Publication No. WO 01/08492 discloses, a process for preparing a dry granular herbicidal composition, comprising forming an ammonium glyphosate paste by mixing in a 5 suitable vessel particulate glyphosate acid, ammonia in an amount of about 0.8 to about 1.25 moles of ammonia per mole of the glyphosate acid, and water in an amount of about 10% to about 25% by weight of all materials being mixed in the vessel, thereby causing a reaction of the glyphosate acid and ammonia that generates heat causing partial evaporation of the water, and forms the ammonium glyphosate paste having a moisture content of about 5% to about 20% by weight. If the moisture content of the paste is greater than about 15% by weight, heat and/or vacuum is applied to reduce the moisture content to about 5% to about 15% by weight. Thereafter, one or more surfactant(s) are added to the paste, with mixing, in a weight ratio of total surfactant to ammonium glyphosate of about 1:9 to about 1:3 to form an extrudable wet mix. The wet mix is extruded to form extrudate strands that break to form moist coherent granules that are dried to produce the dry granular composition.

U.S. Patent No. 5,070,197 issued to Chin, et. al. discloses an extrusion method in which a Bronsted acid, glyphosate acid for example, is intimately admixed in an extruder with a base, sodium hydroxide for example, essentially without addition of "extraneous solvent" such as water, although it is stated that a small amount of water (usually about 4% by weight) is optionally added upstream for "initial lubricity". An acid-base reaction is said to occur in the extruder, forming a salt which is extruded to form a dry composition having a residual moisture content of no greater than 10%. Another method involving the production of a dry sodium glyphosate composition, albeit not involving extrusion, is disclosed in PCT application Publication No. WO 87/04595.

EP - 0378985 discloses the preparation of a glyphosate salt by admixing a base, such as e.g. sodium hydroxide with glyphosate wet cake or moistened glyphosate.

### SUMMARY OF THE INVENTION

The present invention is directed to a continuous process for preparing a dry granular sodium glyphosate composition. The process comprises continuously feeding (i) particulate glyphosate acid, (ii) sodium hydroxide, (iii) water and optionally (iv) adjuvant to a continuous reactor to form a reaction mass wherein the total amount of water added to the reaction mass is from about 10% to about 40% by weight of all the particulate glyphosate acid, sodium hydroxide, water and any adjuvant added to the reactor. The particulate glyphosate acid and sodium hydroxide react exothermically and the water content of the reaction mass is reduced using the heat of reaction of the glyphosate acid and the sodium hydroxide to cause partial evaporation of the water such that the sodium glyphosate paste formed has a moisture content of from about 2% to about 20% by weight. An adjuvant is added to the sodium glyphosate paste to form an extrudable sodium glyphosate mixture, the weight ratio of total adjuvant to sodium glyphosate being from about 1:20 to about 1:2 on a glyphosate acid equivalent, or a.e., basis. The extrudable sodium glyphosate mixture is fed continuously to an extruder having an inlet, a conveyor and an outlet having a screen. The extrudable sodium glyphosate mixture is extruded through apertures in the screen to form extrudate strands that break to form moist coherent granules that are subsequently dried to produce the dry granular composition.

Other objects and features of this invention will be in part apparent and in part pointed out hereinafter.

### BRIEF DESCRIPTION OF THE DRAWINGS

Fig. 1 shows a process flow diagram of a process of the invention for preparing a dry granular herbicidal composition.
Figs. 2 through 4 show a number of views of a gravimetric feeder suitable for supplying glyphosate acid wet cake at a constant feed rate in the process of the invention.

### DETAILED DESCRIPTION OF THE INVENTION

In accordance with the present invention, a process has been discovered whereby particulate glyphosate acid, sodium hydroxide, in the form of a solution, solid or mixtures thereof, water and optionally one or more adjuvant(s) are added to a reactor to form a reaction mass with the amount of water added being from about 10% to about 40% by weight of the amount of the glyphosate acid, sodium hydroxide, water and any adjuvant (if present) combined to form the reaction mass. Advantageously, the exothermic heat produced by the reaction of glyphosate acid and sodium hydroxide causes water to evaporate, resulting in the formation of a "downstream processable" sodium glyphosate paste. The term "downstream processable", as used herein, means that the sodium glyphosate paste is readily capable, upon further reduction in moisture content, if necessary, to about 2% to about 15% by weight of being further processed by extrusion granulation with one or more adjuvant(s) to form a dry granular herbicidal composition having a weight ratio of adjuvant to sodium glyphosate of from about 1:20 to about 1:2, preferably from about 1:9 to about 1:2. A "dry" formulation herein is a composition that is solid, usually particulate, wherein particles are either aggregated as in a granular composition or non-aggregated as in a powder. The word "dry" in this context does not imply that the formulation is necessarily free of water or other liquid, only that it is dry to the touch. Dry formulations can contain up to about 5% by weight of water, but more typically the water content is less than about 1%, for example about 0.5% or lower.

Although various steps in the process may be performed in either a batch or continuous mode, some or all of the process steps are performed continuously. In particular, the reaction of glyphosate acid and sodium hydroxide is carried out in a continuous reactor capable of both mixing the reaction components and conveying the reaction mass to the discharge of the reactor.

### I. Formation of Sodium Glyphosate Paste

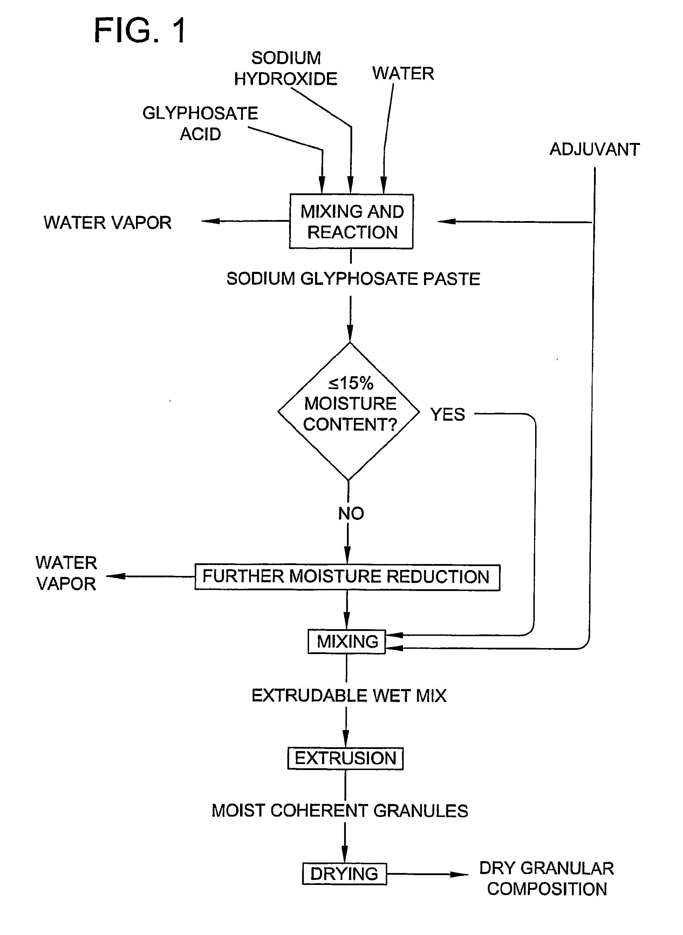

Referring to Fig. 1, the process of the present invention is performed by feeding particulate glyphosate acid, sodium hydroxide in the form of a solid, slurry or aqueous solution, water and optionally one or more adjuvant(s) to a reactor and mixing the reaction components to form a reaction mass wherein the sodium hydroxide reacts with the glyphosate acid to form a downstream processable sodium glyphosate product. The reactor may be any apparatus capable of mixing solid and liquid materials to produce a paste or comparable composition such as, for example, food mixers, planetary mixers, ribbon blenders or kneaders.

In one embodiment, the reactor is an assembly comprising a vessel in which is disposed a rotatable shaft having one or more screw elements coaxial with the shaft and bearing a plurality of radially disposed pins and/or paddles. Upon rotation of the shaft, the screw elements of such an assembly cause bulk movement of the sodium glyphosate reaction mass in a direction parallel to the shaft, while simultaneously the pins and/or paddles constantly mix the reaction mass. More than one of such shafts can be present, disposed parallel to one another and rotatable in the same direction or in opposite directions.

Preferably the reaction components are mixed and the sodium hydroxide and glyphosate acid react in a reactor comprising a substantially enclosed chamber having at an input end an aperture suitable for introduction of the particulate glyphosate acid, having at an output end an aperture suitable for discharge of the sodium glyphosate paste, and having between the input and output ends one or more ports suitable for introduction of sodium hydroxide, water and adjuvant. Optionally, additional ports may be present near the output end for exhaust of water vapor.

In one embodiment, the mixing apparatus is a continuous processor comprising an elongated chamber (e.g., elongated in a substantially horizontal direction) having disposed therein one or more, preferably one or two, rotatably disposed shafts as described above, each on an axis parallel to the elongated dimension of the chamber. Operation of the apparatus by rotation of the shafts effects: (i) feeding of the glyphosate acid into the chamber through the aperture at the input end; (ii) mixing of the ingredients to form a reaction mass; (iii) transport of the reaction mass and the resulting sodium glyphosate paste towards the output end of the chamber; and, (iv) discharge of the sodium glyphosate paste from the aperture at the output end. Sodium hydroxide, water and optionally one or more adjuvant(s) may be added through ports located between the input and output ends. Preferably, water and any adjuvant are added at or near the input end. Sodium hydroxide, if added as a solution or slurry may be added through one or more addition ports located between the input and output ends of the reactor. If sodium hydroxide is added as a solid (e.g., pellets), the solid is preferably introduced at or near the input end to allow sufficient time for dissolution of the solid. In one embodiment, water and optionally one or more adjuvant(s) are pre-mixed with the particulate glyphosate acid prior to feeding the glyphosate acid into the reaction chamber, e.g. water may be pre-mixed with the glyphosate acid to form a glyphosate acid wet cake. Optionally one or more ports for venting water vapor may be present between the sodium hydroxide addition port and the output end. However, it is generally preferred that such venting occur only at the output end itself, through the discharge aperture for the sodium glyphosate paste.

With the information presented herein, one of skill in the art will find it straightforward by routine testing to establish, for any particular apparatus of the type just described, namely a continuous single or twin-shaft mixer/kneader or solids processor, a suitable shaft rotation speed (affecting glyphosate acid feed rate as well as residence time in the chamber), water feed rate, optional adjuvant feed rate and sodium hydroxide addition point (sodium hydroxide addition rate being tied to glyphosate acid feed rate) to operate the process of the present invention efficiently such that the residence time of glyphosate in the chamber is sufficient to permit completion of the reaction forming the sodium glyphosate paste. Where the apparatus has replaceable screw elements and pin and/or paddle elements on the shafts, the skilled person will also readily be able, by routine testing, to identify an optimum configuration of such elements. Equipment suitable for carrying out the present invention of the type described, namely a continuous single or twin-shaft mixer/kneader or solids processor, are commercially available, for example, from Buhler Limited (Uzwil, Switzerland), Readco Manufacturing Inc. (York, Pennsylvania) and Werner and Pflieder Corporation (Ramsey, New Jersey), and are available in various sizes (for example, 5 cm, 13 cm, 20 cm, 25 cm, 38 cm, 62 cm, 93 cm, 125 cm and 175 cm in diameter) depending on the type of equipment selected and the desired throughput.

### a. Glyphosate Acid Addition

Any grade of particulate glyphosate acid can be added to the reactor. For example, technical grade glyphosate acid in the form of wet cake has been found to be suitable, but if desired the glyphosate acid can be pre-dried and/or pre-ground. Glyphosate acid particles having a nominal diameter in excess of about 400 µm or even about 300 µm may adversely affect the rate at which the reaction of particulate glyphosate acid with sodium hydroxide occurs. Therefore, although not critical to the present invention, the particulate glyphosate acid preferably has a particle size distribution such that at least about 80% of the particles have a nominal diameter of less than about 400 µm in diameter and more preferably less than about 300 µm. More preferably, the glyphosate acid has a particle size distribution such that at least about 90% of a nominal diameter of less than about 400 µm in diameter and more preferably less than about 300 µm. In a particularly preferred embodiment, the particle size distribution is such that the median nominal diameter is from about 30 µm to about 230 µm, more preferably from about 50 µm to about 150 µm, and still more preferably from about 75 µm to about 125 µm. However, it should be noted that the particle size distribution may vary outside these ranges without departing from the scope of the present invention.

Preferably, the particulate glyphosate acid is added in the form of a wet cake having a moisture content of less than about 18%, more preferably from about 5% to about 15%, more preferably from about 8% to about 15%, and even more preferably from about 11% to about 13% by weight. If the glyphosate acid is supplied in the form of wet cake, it may be necessary to feed the glyphosate acid using a feeder, as described hereinafter, in order to maintain a constant feed rate.

Glyphosate acid wet cake is a somewhat cohesive material that typically does not flow freely without the application of external force. Even when agitated, the wet cake tends to form "bridges" in static zones within the feed vessel where the wet cake is not in motion. Over time, these bridges can grow to the point that no wet cake flows from the feed vessel, resulting in an excess amount of sodium hydroxide in the downstream reaction step that may lead to production of an unsatisfactory sodium glyphosate product. A further complication is that the moisture content of the glyphosate wet cake may vary. When the mixing and reaction steps are carried out continuously, it is preferred that the glyphosate acid wet cake be fed using equipment that reliably maintains a constant feed rate and that is not susceptible to bridging.

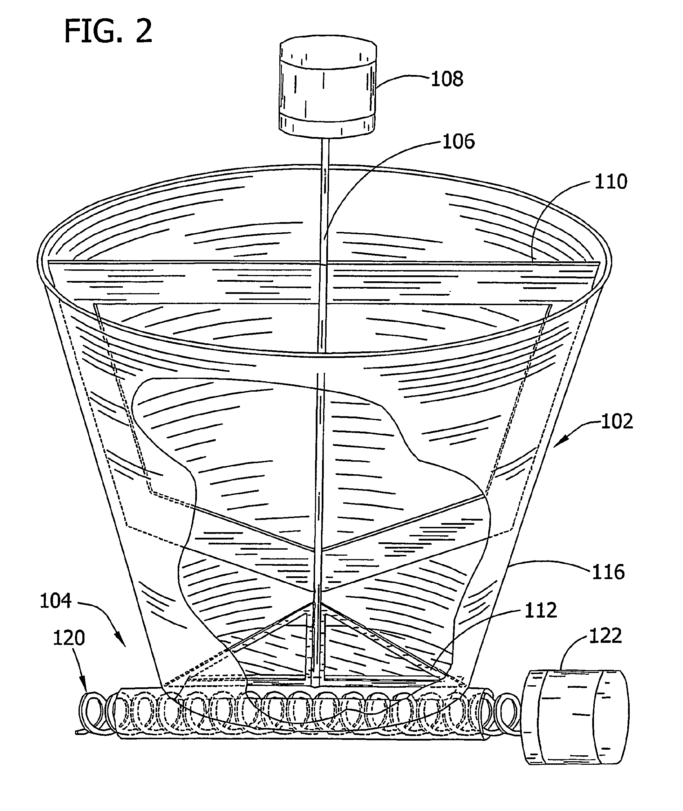

Fig. 2 depicts a suitable feeding apparatus that is designed to minimize the amount of bridging. The apparatus includes an upper feeder 102 and a lower feeder 104. The upper feeder includes a feed hopper 116 equipped with an agitator 106 driven by a motor 108.

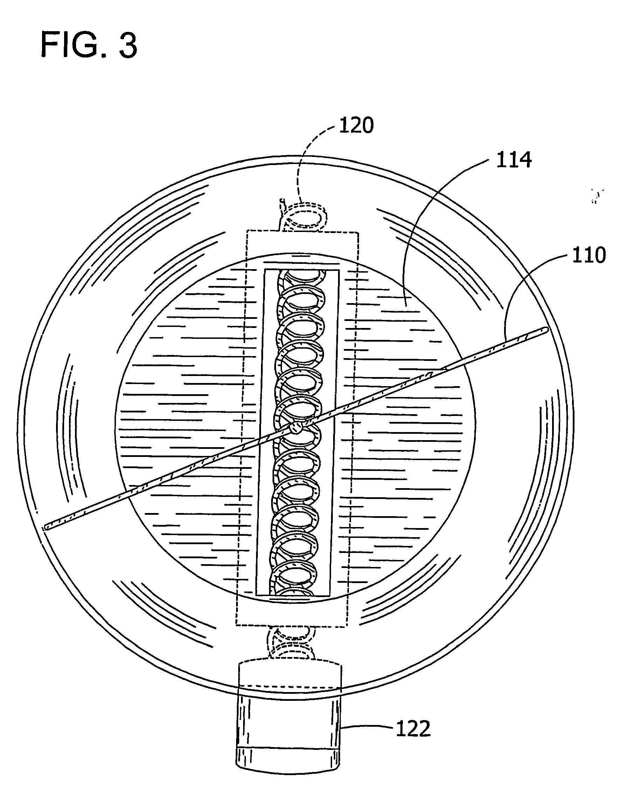

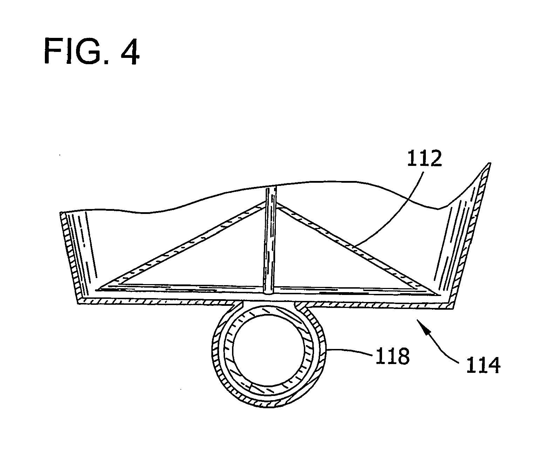

The agitator includes upper blades 110 and lower blades 112. The upper blades are preferably open paddles shaped so as to fit closely within the walls of the hopper. Lower blades 112 are placed so as to maintain a minimum clearance, preferably less than about 1.6 mm from the top of the screw in the lower feeder so as to prevent accumulation of wet cake on the bottom plate. As shown in Figs. 3 and 4, bottom plate 114 is formed with an integral trough 118 that forms the housing of lower feeder 104. Commercially available feeders that employ this type of agitator design typically provide about 6.5 mm clearance between the blade edges and the bottom plate. However, in the practice of the present invention, if the clearance between the blades and the bottom plate is this large, bridges of wet cake tend to form across the top of this trough, impeding or stopping the flow of wet cake to the lower feeder. Preferably, therefore, the clearance is less than about 6.5 mm and more preferably less than about 1.6 mm from the top of the screw to the bottom plate to reduce the tendency of glyphosate wet cake to accumulate on the plate.

It should be noted that the agitator speed may also affect the performance of the feeder. That is, if the agitator rotates too quickly, it may force material into the lower feed unit faster than the screw can transport the wet cake into the reaction apparatus. If the agitation speed is too low, the agitator will not break up the bridges forming in the hopper. The optimum agitator speed for a given feeder design may be readily determined by routine experimentation to ensure that the feed rate is not adversely affected and that the formation of bridges is sufficiently suppressed.

Lower feed unit 104 is preferably a screw feeder equipped with screw 120 and driven by motor 122. Although many varieties of screw may be suitable when the moisture content of the wet cake is relatively low, most types of screw do not function well when the wet cake contains sufficient moisture that bridging is possible. One screw configuration that does work well, even at higher moisture levels, is a single-helix, open-spiral auger without a center shaft. Fig. 3 depicts the preferred design of screw 120. Feeding apparatus as described above for feeding glyphosate wet cake to the reactor is commercially available, for example, from Merrick Industries (Lynn Haven, Florida).

While the glyphosate acid is preferably fed continuously to the process using equipment as described above, any equipment that reliably maintains a constant feed rate of moist glyphosate acid may be used without departing from the scope of the present invention.

### b. Sodium hydroxide Addition

The sodium hydroxide may be fed to the reactor as a solid (e.g., pellets or beads), slurry or an aqueous solution (e.g., an aqueous solution having a sodium hydroxide concentration of from about 30% to about 50% by weight), or combination thereof through one or more addition ports in the reactor vessel. Sodium hydroxide is preferably fed to the reactor at a rate sufficient to provide an approximately stoichiometric amount of sodium hydroxide necessary to react with and neutralize the glyphosate acid being fed to the reactor to form sodium glyphosate. Glyphosate acid is a tribasic acid and as such will form mono-sodium glyphosate, di-sodium glyphosate or tri-sodium glyphosate salts. In general, any of the salts or mixtures therefrom such as a sesqui salt may be made by the process of the present invention. Accordingly, the molar ratio of sodium hydroxide to glyphosate acid added to the reactor is generally from about 0.8 to about 2 and even as high as 2.5. Typically, however, the mono-sodium salt is preferred. A sodium hydroxide addition rate of less than about 1 mole of sodium hydroxide per mole of glyphosate acid may result in a portion of the glyphosate acid remaining unneutralized. However, such practice is generally acceptable provided the portion of unneutralized glyphosate acid is relatively small, for example less than about 20%, resulting in the presence of at least about 4 moles of sodium glyphosate per mole of unneutralized glyphosate acid in the reaction product. A sodium hydroxide addition rate of greater than about 1 mole of sodium hydroxide per mole may result in a portion of the glyphosate acid reacting to form di-sodium glyphosate. Typically therefore, the molar ratio of sodium hydroxide to glyphosate acid added to the reactor is from about 0.8 to about 1.25, from about 0.9 to about 1.1 and in one embodiment from about 0.95 to about 1.05 moles of sodium hydroxide added per mole of glyphosate acid added. Preferably, a substantially stoichiometric amount of sodium hydroxide is used such that the molar ratio of sodium hydroxide to glyphosate acid is about 1.

### c. Water Addition

The neutralization of glyphosate acid with sodium hydroxide is an exothermic reaction. In general, the amount of water fed to the reactor is preferably sufficient to contribute usefully to dissipation of heat by evaporative cooling. That is, the evaporation of water from the reaction mass dissipates some of the heat generated in the exothermic reaction. While the reaction may be carried out at temperatures as low as ambient temperatures, the temperature of the reaction mass typically increases rapidly due to the exothermic nature of the reaction. The temperature at which the reaction is carried out is typically from about 70°C to about 105°C and is more preferably about 100°C. Advantageously, the evaporation of water additionally reduces the amount of water that may need to be removed in a subsequent step if a lower water content material is desired.

Although some reduction in moisture concentration is desirable, it is also desirable to maintain a sufficient concentration to sustain the homogeneity of the reaction mass to ensure the completion of the reaction. That is, the evaporation of some of the water in the reaction mass reduces the moisture content, thus affecting the flow characteristics of the reaction mass. Accordingly, the water is preferably fed to the reactor at a rate sufficient to provide not only the evaporative cooling effect as described above, but also to ensure the reaction mass may be readily homogenized with the degree of energy available in the mixing system used in the reactor, so that the acid-base reaction proceeds smoothly and completely producing a downstream processable paste. In some types of high-energy mixing or kneading equipment having an effective conductive cooling system in the form of, for example, a water jacket, a relatively stiff paste having relatively low moisture content is acceptable, whereas in lower-energy equipment or equipment having a less effective conductive cooling system it can be desirable to form a wetter, more fluid paste.

In view of these considerations, the total amount of water fed to the reactor is typically from about 10% to about 40%, and more preferably from about 13% to about 35%, by weight of all of the glyphosate acid, sodium hydroxide, water and any adjuvant added to the reaction vessel. It should be noted that the total amount of water added to the reaction mass includes the water formed by the reaction between the glyphosate acid and sodium hydroxide; one mole of water being generated per mole of sodium hydroxide reacted with glyphosate acid. Within the above-described range, the amount of water present in the initial reaction mass is not narrowly critical. The precise amount of water for a particular apparatus and set of reaction conditions may be readily determined by one of skill in the art.

The proportion of water that is added as part of the moist glyphosate acid (i.e., wet cake), sodium hydroxide or any adjuvant may vary without departing from the scope of the present invention provided the total amount of water added, including the water produced by the reaction, is consistent with the above stated range. For example, where 100 parts by weight of glyphosate acid are mixed with 20 parts by weight of sodium hydroxide (both expressed on a water-free basis) and no other ingredients except water are added in the reaction step, a suitable amount of water is from about 12 to about 60 parts by weight. Typically, the evaporation of water results in a decrease of from about 1 to about 15 percentage points and more typically from about 1 to about 10 percentage points in the moisture content of the reaction mass during the reaction step such that the sodium glyphosate paste discharged from the reactor may have a moisture content of from about 0.1% to about 20%. Preferably, the sodium glyphosate paste has a moisture content of from about 2% to about 20%. If the moisture content of the sodium glyphosate paste is greater than about 15% by weight, additional heat can added to the reaction to increase water evaporation. Additionally or alternatively, further reduction in moisture content of the composition can be effected by application of heat and/or vacuum to the paste after completion of the reaction step. Any moisture reduction or partial drying method known in the art can be used. To avoid the necessity for application of heat and/or vacuum to drive off further water, it is preferred that the process conditions are such that the sodium glyphosate paste has a moisture content of no greater than about 15% by weight. More precisely, it is preferable to add no more water at the beginning of the process than is necessary to provide a suitable composition consistency and sufficient evaporative cooling, and to result in a downstream processable sodium glyphosate paste having a moisture content of from about 2% to about 15%, still more preferably from about 2% to about 10%, still more preferably from about 2% to about 5% and most preferably from about 3% to about 5% by weight. It should be noted that a substantial amount of water may continue to evaporate from the reaction mass during cooling. Thus, the water content in the reaction mass is preferably determined after the paste has been allowed to cool to from about 50°C to about 70°C. The moisture content can be measured using any means known in the art for determining such a composition. Devices capable of measuring the moisture content are commercially available, for example, from Denver Instrument Company (Arvada, Colorado).

For example, in one embodiment the sodium hydroxide is added in solid form, the amount of water introduced is preferably less than about 20% and more preferably less than about 18% by weight of all of the glyphosate acid, sodium hydroxide, water and any adjuvant added.

The sodium glyphosate paste produced by the process described in detail above can be packaged as a concentrate herbicidal composition, either as produced or dried, for example by drum drying to form solid flakes. In addition, depending on the amount of adjuvant added, if any, and the moisture content of the sodium glyphosate paste, the paste may solidify upon cooling to form mixture that "crumbles" to the touch.

### d. Adjuvant Addition

One or more adjuvant(s) may be added to the reactor or combined with the sodium glyphosate paste in a subsequent step or both. The addition of an adjuvant to the reaction mass may increase the rate of formation of sodium glyphosate paste, reduce the flow resistance of sodium glyphosate paste or both, thereby providing a process having improved throughput. The adjuvant may be added in various amounts, depending upon the adjuvant and the desired composition and properties of the final product. For example, the weight ratio of adjuvant to sodium glyphosate on an acid equivalent basis may be at least about 1:250, and will typically be at least about 1:100, respectively. In some embodiments, the weight ratio of adjuvant to sodium glyphosate on an acid equivalent basis added may be even greater with the weight ratio being at least about 1:75, at least about 1:50, at least about 1:25, at least about 1:10, at least about 1:5 or even at least about 1:2, respectively. In general, however, the weight ratio will be less than about 1:2, respectively, such that the weigh ratio is generally from about 1:250 to about 1:2, from about 1:100 to about 1:2 or even from about 1:25 to about 1:2, with weight ratios of from about 1:250 to about 1:10, from about 1:150 to about 1:25, or even from about 1:100 to about 1:50, respectively, being typical.

The adjuvant component of the reaction mixture may be a single adjuvant or it may comprise two or more adjuvants. Preferably, the adjuvant component added to the reaction mixture includes one or more surfactant(s) capable of enhancing the herbicidal efficacy of the finished product. Where two or more adjuvants are used, they may be added separately or they may be blended together first and added to the reactor or to the paste product or a portion added to each. Other materials, including water and/or glycols, can optionally be admixed with the adjuvant or adjuvants prior to their addition.

In general, the adjuvant may be a nonionic surfactant, cationic surfactant, anionic surfactant, amphoteric surfactant, silicone surfactant, fluorocarbon surfactant or lubricant. Examples of suitable nonionic surfactants include alkylpolyglucosides; glycerol esters such as glyceryl monolaurate, and ethoxylated glyceryl monococoate; ethoxylated castor oil; ethoxylated reduced sugar esters such as polyoxyethylene sorbitol monolaurate; esters of other polyhydric alcohols such as sorbitan monolaurate and sucrose monostearate; ethoxylated amides such as polyoxyethylene cocoamide; ethoxylated esters such as monolaurate of polyethylene glycol 1000 and dilaurate of polyethylene glycol 6000; ethoxylated alkyl or arylphenols such as nonylphenol ethoxylate, octylphenol ethoxylates, dodecylphenol ethoxylates, dinonylphenol ethoxylates and tristyrylphenol ethoxylates; alcohol ethoxylates such as fatty alcohol ethoxylates (e.g., oleyl alcohol ethoxylate), tridecylalcohol ethoxylates and other alcohol ethoxylates such as neodols and oxoalcohol ethoxylates; and ethylene oxide/propylene oxide copolymers such as pluronic type, tetronic type, or tergitol XH type. Examples of suitable cationic surfactants include alkylamine ethoxylates (including etheramines and diamines) such as tallowamine ethoxylate, cocoamine ethoxylate, etheramine ethoxylate, -tallow ethylenediamine ethoxylate and amidoamine ethoxylates; alkylamine quaternary amines such as alkoxylated quaternary amines (e.g., ethoxylated quaternary amines or propoxylated quaternary amines); alkylamine acetates such as tallowamine acetate or octylamine acetate; and amine oxides such as ethoxylated amine oxides (e.g., N,N-bis(2-hydroxyethyl)cocoamine -oxide), nonethoxylated amine oxides (e.g., cethyldimethylamine -oxide) and amidoamine oxides. Examples of suitable anionic surfactants include fatty soaps such as ammonium tallowate and sodium stearate; alkyl sulfates such as sodium C₈₋₁₀ alcohol sulfate, sodium oleyl sulfate, and sodium lauryl sulfate; sulfated oils such as sulfated castor oil; ether sulfates such as sodium lauryl ether sulfate, ammonium lauryl ether sulfate, and ammonium nonylphenol ether sulfate; sulfonates such as petroleum sulfonates, alkylbenzene sulfonates (e.g., sodium (linear) dodecylbenzene sulfonate or sodium (branched) dodecylbenzene sulfonate), alkylnapthalene sulfonates (e.g., sodium dibutylnapthalene sulfonate), alkyl sulfonates (e.g., alpha olefin sulfonates), sulfosuccinates such as dialkylsulfosuccinates (e.g., sodium dioctylsulfosuccinate) and monoalkylsulfosuccinate and succinamides (e.g., disodium laurylsulfosuccinate and disodium N-alkylsulfosuccinamate); sulfonated amides such as sodium N-methyl N-coco taurate; isethionates such as sodium cocoyl isethionate; sarcosinates such as N-lauroyl sarcosine; and phosphates such as alkylether ethoxylate phosphates and alkylarylether ethoxylated phosphates. Examples of suitable amphoteric surfactants include betaines such as simple betaines (e.g., cocodimethylbetaine), sulfobetaines, amidobetaines, and cocoamidosulfobetaines; imidazolinium compounds such as disodium lauroamphodiacetate, sodium cocoamphoacetate, sodium cocoamphopropionate, disodium cocoaminodipropionate, and sodium cocoamphohydoxypropyl sulfonate; and other amphoteric surfactants such as N-alkyl, N,-bis(2-hydroxyethyl)glycine and alkylaminedipropionates. Examples of suitable lubricants include fatty acids such as oleic acid; silicon oils such as polydimethylsiloxane; fatty esters such as corn oil, sugars and reduced sugars.

In a preferred embodiment, at least one adjuvant is a cationic surfactant, amphoteric surfactant or selected from the class of surfactants known as alkyl polyglycosides (APGs) and polyoxyethylene C₁₆₋₂₂ alkylethers (each of which is nonionic). Polyoxyethylene derivatives of such cationic and amphoteric surfactants are particularly preferred. The term "alkyl" is used in the present context to denote one or more linear or branched, saturated or unsaturated hydrocarbyl chains having, unless otherwise specified, about 8 to about 22 carbon atoms.

The adjuvant or adjuvant blend is preferably added in a liquid state. Solid adjuvant can be added in the solid state or alternatively can be heated to a temperature above their melting point and added in the liquid state. Solid adjuvant may also be added either as an aqueous slurry, or if the solubility of the adjuvant is sufficiently high may be added as a solution. Liquid adjuvant may also be heated to improve the flow characteristics of the adjuvant.

### II. Granulation Process

Surprisingly, the sodium glyphosate paste of the present invention has been found to be particularly suitable as an intermediate in preparation of a dry granular herbicidal composition as more particularly described below. What is especially surprising is that the sodium glyphosate in the downstream processable paste form generated herein has been found to have the required absorbency and/or adsorbency properties to enable efficient formulation as a dry granular herbicidal composition with adjuvant at up to about 25% by weight of the finished formulation, by a process of extrusion granulation.

In another embodiment of the present invention, therefore, the sodium glyphosate paste is further processed to form dry sodium glyphosate granules. According to this embodiment, one or more adjuvant(s) (or additional adjuvant(s) if adjuvant is present in the reaction mass) is added to the sodium glyphosate paste and mixed until a homogeneous wet mix, preferably having a dough-like consistency (herein referred to as an extrudable sodium glyphosate mixture) is formed. Preferably, the adjuvant component added to the sodium glyphosate paste includes one or more surfactant(s) capable of enhancing the herbicidal efficacy of the finished product. In a particularly preferred embodiment the adjuvant(s) comprise one or more cationic surfactant(s). Depending upon the amount of adjuvant added to the reactor, if any, one or more adjuvant(s) (separately or as a blend, if more than one is used) may be combined with the sodium glyphosate paste. In one embodiment, additional quantities of the same adjuvant(s) as those added to the reactor are also combined with the finished sodium glyphosate paste. In another embodiment, the adjuvant(s) added to the glyphosate paste differ in some respect (composition or relative proportion if more than one) from the adjuvant(s) added to the reactor. Typically, the amount of adjuvant added to the reactor will be less than the amount of adjuvant added to the finished sodium glyphosate paste.

The weight ratio of total adjuvant to sodium glyphosate on an acid equivalent basis depends, among other things, on the type of adjuvant(s) used. Such a ratio will often be a compromise between, on the one hand, providing sufficient adjuvant to give a high degree of herbicidal efficacy in the finished product, and on the other hand, less than the amount of adjuvant that results in the finished granules being sticky or otherwise prone to aggregate and form lumps. The ratio of adjuvant to glyphosate acid which produces a high degree of herbicidal efficacy without producing a dry granular formulation having sticky granules may be determined as matter of routine testing by one of skill in the art. Taking into account the adjuvant added to the reactor, if any, and the adjuvant added to the finished sodium glyphosate paste prior to extrusion, the weight ratio of total adjuvant to sodium glyphosate (on an acid equivalent basis) in the finished granules is generally from about 1:20 to about 1:2, preferably from about 1:9 to about 1:2. Typically, the weight ratio will be from about 1:6 to about 1:3. Where the adjuvant selected is a polyoxyethylene alkylamine, for example ethoxylated (20) tallowamine, a particularly useful weight ratio has been found to be from about 1:3 to about 1:5.

Addition of adjuvant to the sodium glyphosate paste immediately on completion of the reaction step, without permitting the composition to cool, may result in the adjuvant failing to mix intimately with the paste to form an extrudable sodium glyphosate mixture. Although some adjuvants are more tolerant than others in this respect, it is generally preferred to add the adjuvant to sodium glyphosate paste after the paste has cooled to a temperature of from about 25°C to about 75°C, more preferably about 50°C to about 70°C and more preferably about 70°C.

In one embodiment of the present invention, the sodium glyphosate paste and one or more adjuvant(s) are mixed to form an extrudable wet mix in the same vessel or reactor in which the reaction step is carried out. Preferably, in such an embodiment, the sodium hydroxide and glyphosate acid react to form sodium glyphosate paste and the paste cools to a temperature of less than about 70°C prior to the addition of the adjuvant component to form the extrudable sodium glyphosate mixture. That is, the particulate glyphosate acid, sodium hydroxide and water enter at the input end of the reactor to form a reaction mass. The reaction mass is conveyed over some distance towards the discharger of the reactor herein referred to as the reactor zone. The sodium glyphosate paste formed in the reactor zone is then conveyed through a cooling zone, wherein the paste is cooled from the temperature at which the reaction takes place (i.e., about 70°C to about 105°C) to a temperature of about 70°C. The cooling zone can be cooled, for example, by circulation of cool water in a cooling jacket to ensure the paste is at an appropriate temperature for the addition of adjuvant as described above. Finally, adjuvant is added to the cooled paste to form an extrudable sodium glyphosate mixture and the extrudable sodium glyphosate paste is discharged from the discharge end of the reactor vessel.

In another embodiment, reaction occurs in a continuous reactor as described above to form the sodium glyphosate paste which is then discharged from the reactor and fed continuously to a separate mixing apparatus, for example a continuous kneader, wherein one or more adjuvant(s) are added to the sodium glyphosate paste to form an extrudable sodium glyphosate mixture. Such continuous mixing apparatus are commercially available, for example, from Fuji Paudal Ltd. (Osaka, Japan) and Readco Manufacturing Inc. (York, Pennsylvania).

Other materials can optionally be added to either the process for producing the sodium glyphosate paste or the process for forming the extrudable sodium glyphosate mixture without departing from the process of the present invention. For example, a small amount of sodium sulfite can be added to inhibit nitrosamine formation. In addition, or alternatively, other ingredients which enhance the herbicidal activity i.e., inorganic salts such as ammonium sulfate, or even a second herbicidal active ingredient may be added.

The second herbicidal active ingredient, if included, can be, like glyphosate, an acid which is converted to its sodium salt by reaction with sodium hydroxide in the reaction step. Illustrative examples of such herbicides are acifluorfen, asulam, benazolin, bentazon, bilanafos, bromacil, bromoxynil, chloramben, clopyralid, 2,4-D, 2,4-DB, dalapon, dicamba, dichlorprop, diclofop, endothall, fenac, fenoxaprop, flamprop, fluazifop, flumiclorac, fluoroglycofen, fomesafen, fosamine, glufosinate, haloxyfop, imazameth, imazamethabenz, imazamox, imazapic, imazapyr, imazaquin, imazethapyr, ioxynil, MCPA, MCPB, mecoprop, methylarsonic acid, naptalam, nonanoic acid, picloram, quinclorac, quizalofop, sulfamic acid, 2,3,6-TBA, TCA and triclopyr. Alternatively, any of these herbicidal active ingredients can be added already neutralized and in the form of a salt.

Salts of the above herbicides are generally water-soluble and the end-product of the process is a water-soluble granular formulation. Optionally, a water-insoluble herbicidal active ingredient can be included in the mix, in which case the end-product of the process is a water-dispersible granular formulation. Water-insoluble herbicides useful in this embodiment of the invention illustratively include acetochlor, aclonifen, alachlor, ametryn, amidosulfuron, anilofos, atrazine, azafenidin, azimsulfuron, benfluralin, benfuresate, bensulfuron-methyl, bensulide, benzofenap, bifenox, bromobutide, bromofenoxim, butachlor, butamifos, butralin, butroxydim, butylate, cafenstrole, carbetamide, carfentrazone-ethyl, chlomethoxyfen, chlorbromuron, chloridazon, chlorimuron-ethyl, chlorotoluron, chlornitrofen, chlorotoluron, chlorpropham, chlorsulfuron, chlorthal-dimethyl, chlorthiamid, cinmethylin, cinosulfuron, clethodim, clodinafop-propargyl, clomazone, clomeprop, cloransulam-methyl, cyanazine, cycloate, cyclosulfamuron, cycloxydim, cyhalofop-butyl, daimuron, desmedipham, desmetryn, dichlobenil, diclofop-methyl, diflufenican, dimefuron, dimepiperate, dimethachlor, dimethametryn, dimethenamid, dinitramine, dinoterb, diphenamid, dithiopyr, diuron, EPTC, esprocarb, ethalfluralin, ethametsulfuron-methyl, ethofumesate, ethoxysulfuron, etobenzanid, fenoxaprop-ethyl, fenuron, flamprop-methyl, flazasulfuron, fluazifop-butyl, fluchloralin, flumetsulam, flumiclorac-pentyl, flumioxazin, fluometuron, fluorochloridone, fluoroglycofen-ethyl, flupoxam, flurenol, fluridone, fluroxypyr-1-methylheptyl, flurtamone, fluthiacet-methyl, fomesafen, halosulfuron, haloxyfop-methyl, hexazinone, imazosulfuron, indanofan, isoproturon, isouron, isoxaben, isoxaflutole, isoxapyrifop, lactofen, lenacil, linuron, mefenacet, metamitron, metazachlor, methabenzthiazuron, methyldymron, metobenzuron, metobromuron, metolachlor, metosulam, metoxuron, metribuzin, metsulfuron, molinate, monolinuron, naproanilide, napropamide, naptalam, neburon, nicosulfuron, norflurazon, orbencarb, oryzalin, oxadiargyl, oxadiazon, oxasulfuron, oxyfluorfen, pebulate, pendimethalin, pentanochlor, pentoxazone, phenmedipham, piperophos, pretilachlor, primisulfuron, prodiamine, prometon, prometryn, propachlor, propanil, propaquizafop, propazine, propham, propisochlor, propyzamide, prosulfocarb, prosulfuron, pyraflufen-ethyl, pyrazolynate, pyrazosulfuron-ethyl, pyrazoxyfen, pyributicarb, pyridate, pyriminobac-methyl, quinclorac, quinmerac, quizalofop-ethyl, rimsulfuron, sethoxydim, siduron, simazine, simetryn, sulcotrione, sulfentrazone, sulfometuron, sulfosulfuron, tebutam, tebuthiuron, terbacil, terbumeton, terbuthylazine, terbutryn, thenylchlor, thiazopyr, thifensulfuron, thiobencarb, tiocarbazil, tralkoxydim, triallate, triasulfuron, tribenuron, trietazine, trifluralin, triflusulfuron and vernolate.

The extrudable sodium glyphosate mixture is fed to an extruder to form moist extrudate strands that break to form moist coherent sodium glyphosate granules. The extruder preferably has an inlet through which the extrudable sodium glyphosate mixture is fed, and outlet comprising a screen having apertures through which the extrudable sodium glyphosate mixture is extruded to form extrudate strands, and a conveyor for transporting the extrudable sodium glyphosate mixture from the inlet to the outlet. The extrusion process may be carried out in any extruder apparatus known in the art, such as basket-type extruders, axial extruders, radial extruders or twin dome extruders. In a preferred embodiment, the extrusion process may be carried out using a low-pressure radial or twin-dome extruder. Such extruders are commercially available, for example, from Fuji Paudal Company Ltd. (Osaka, Japan), Readco Manufacturing Inc. (York, Pennsylvania) and Bonnett Co. (Union Town, Ohio).

The extrudable sodium glyphosate mixture is preferably extruded through screens having apertures preferably of diameter about 0.5 to about 2 mm, more preferably about 0.6 to about 1.5 mm. Screens with apertures having a nominal diameter within this range, for example screens with apertures having a nominal diameter of about 0.5 mm, about 0.6 mm, about 0.7 mm, about 1.0 mm, about 1.2 mm or larger are commercially available, for example, from LCI Corporation (Charlotte, North Carolina). The size of the apertures is selected based on the desired size of the sodium glyphosate granules and is not critical to the process of the present invention.

The addition of one or more adjuvant(s) to the reaction mass and/or additionally to the sodium glyphosate paste (prior to the extrusion step, in particular) results in the formation of an extrudable sodium glyphosate mixture which is less sticky and less abrasive to the extrusion die or screen. Accordingly, the amount of power required by the extruder may be significantly reduced (e.g., a reduction in power required of about 5%, 10%, 20%, 30% or even more, depending upon the adjuvant selected and the amount added). In addition, the throughput of the extruder may be significantly increased (e.g., an increase in throughput of about 5%, 10%, 25%, 50% or even more depending on the adjuvant selected and the amount added).

The extrudate emerging from the screens initially forms elongated strands which tend to break spontaneously to form short cylindrical granules. If the strands do not break readily it may be necessary to add a cutting device at the extruder head; however, if the sodium glyphosate powder has the desired absorption and/or adsorption properties and the amount of water added is within the optimum range as described above, a cutting operation is usually not necessary.

Immediately after extrusion, the granules are moist and coherent, but are not sticky and do not agglomerate. At this point the granules can, if desired, be subjected to a rolling or tumbling action, for example in a tumbler or spheronizer, to give them a more rounded shape and to make them more uniform in size.

Finally, the moist granules may be dried to further reduce the moisture concentration if desired. Any known drying method can be used, but a preferred method is fluid bed drying. Preferably, a continuous fluid bed dryer is used with continuous inward feed from the extruder and continuous outward feed, for example to a holding vessel or packaging unit, optionally via a classifying step as indicated below. The granules are preferably dried to a moisture content below about 1%, more preferably below about 0.5%, by weight.

After drying, the granules can be packaged or held in a hopper or other storage vessel until ready for packaging, but it is generally preferred to first classify the granules, for example by sieving, to retain only those in a desired size range. An illustrative size range to be retained is larger than 40 mesh (about 0.6 mm) and smaller than 5 mesh (about 5 mm). Over-sized and under-sized granules or fragments or aggregates thereof can be recycled by adding them to the wet mix prior to extrusion.

### EXAMPLES

The following Examples are provided for illustrative purposes only and are not intended to limit the scope of the present invention. The Examples will permit better understanding of the invention and perception of its advantages and certain variations of execution.

### Example 1: Preparation of Sodium Glyphosate Paste Using Solid Sodium Hydroxide Pellets

The composition was prepared in a co-rotating twin screw reactor with 2" diameter screws (manufactured by Readco Manufacturing Inc., York, Pennsylvania). In one example, the reactor was preheated 95°C using steam prior to adding any ingredients. Once the reaction began, the external heating was discontinued. Glyphosate acid wet cake having a moisture content of about 7% by weight water was fed into the reactor at a rate of about 35 lb/hr. Sodium hydroxide pellets were added to the reactor at a rate of about 7.8 lbs/hr. Witco FloMo 1407 surfactant was added to the reactor at a rate of about 1.0 lb/hr. The sodium hydroxide reacted with the glyphosate to produce a paste of sodium glyphosate having a moisture content of about 3.2% by weight. A 1% solution of paste in water was approximately pH 3.9.

In another example, the reactor was preheated to 95°C using steam prior to adding any ingredients. Once the reaction began, the external heating was discontinued. Glyphosate acid wet cake having a moisture content of about 7% by weight water was fed into the reactor at a rate of about 35 lb/hr. Sodium hydroxide pellets were added to the reactor at a rate of about 7.8 lbs/hr. No surfactant was added to the reactor. The sodium hydroxide reacted with the glyphosate to produce a paste of sodium glyphosate having a moisture content of about 3.8% by weight. A 1% solution of paste in water was approximately pH 3.7.

### Example 2: Preparation of Sodium Glyphosate Paste Using a 50% Sodium Hydroxide Solution

The composition was prepared in a co-rotating twin screw reactor with 2" diameter screws (manufactured by Readco Manufacturing Inc., York, Pennsylvania). In one example, the reactor was preheated to 150°C using steam prior to adding any ingredients. The external steam heating was continued throughout the reaction. Glyphosate acid wet cake having a moisture content of about 7% by weight water was fed into the reactor at a rate of about 35 lb/hr. A 50% solution of sodium hydroxide was added to the reactor at a rate of about 15.6 lbs/hr. Witco FloMo 1407 surfactant was added to the reactor at a rate of about 1.0 lb/hr. The sodium hydroxide reacted with the glyphosate to produce a paste of sodium glyphosate having a moisture content of about 1.7% by weight. A 1% solution of paste in water was approximately pH 4.7.

In another example, the reactor was preheated to 150°C using steam prior to adding any ingredients. The external steam heating was continued throughout the reaction. Glyphosate acid wet cake having a moisture content of about 7% by weight water was fed into the reactor at a rate of about 35 lb/hr. A 50% solution of sodium hydroxide was added to the reactor at a rate of about 15.6 lbs/hr. No surfactant was added to the reactor. The sodium hydroxide reacted with the glyphosate to produce a paste of sodium glyphosate having a moisture content of about 1% by weight. A 1% solution of paste in water was approximately pH 4.8.

In view of the above, it will be seen that the several objects of the invention are achieved. As various changes could be made in the above-described process without departing from the scope of the invention, it is intended that all matters contained in the above description be interpreted as illustrative and not in a limiting sense.

When introducing elements of the present invention or the preferred embodiment(s) thereof, the articles "a," "an," "the" and "said" are intended to mean that there are one or more of the elements. The terms "comprising," "including" and "having" are intended to be inclusive and mean that there may be additional elements other than the listed elements.

## Claims

1. A continuous process for preparing a dry granular sodium glyphosate composition, the process comprising:
continuously feeding (i) particulate glyphosate acid, (ii) sodium hydroxide, (iii) water and optionally (iv) adjuvant to a continuous reactor to form a reaction mass wherein the total amount of water added to the reaction mass is from about 10% to about 40% by weight of all the particulate glyphosate acid, sodium hydroxide, water and any adjuvant added to the reactor, thereby causing a reaction of the glyphosate acid and sodium hydroxide that generates heat and forms a sodium glyphosate paste;
reducing the water content of the reaction mass using the heat of reaction of the glyphosate acid and the sodium hydroxide to cause partial evaporation of the water such that the sodium glyphosate paste formed has a moisture content of from about 2% to about 20% by weight;
adding an adjuvant to the sodium glyphosate paste to form an extrudable sodium glyphosate mixture, the weight ratio of total adjuvant to sodium glyphosate being from about 1:20 to about 1:2 on a glyphosate acid equivalent basis;
continuously feeding the extrudable sodium glyphosate mixture to an extruder having an inlet, a conveyor and an outlet having a screen and extruding the extrudable sodium glyphosate mixture through apertures in the screen to form extrudate strands that break to form moist coherent granules; and,
drying the granules to produce the dry granular composition.

2. The process of claim 1 wherein a portion of the adjuvant is added to the reaction mass and the remainder of the adjuvant is added to the sodium glyphosate paste.

3. The process of claim 1 wherein the adjuvant is selected from a group consisting of nonionic surfactants, cationic surfactants, anionic surfactants, amphoteric surfactants, silicone surfactants, fluorocarbon surfactants, lubricants and mixtures thereof.

4. The process of claim 3 wherein the adjuvant is a cationic surfactant.

5. The process of claim 4 wherein the cationic surfactant is selected from a group consisting of alkylamine ethoxylates, alkylamine quaternary amines, alkylamine acetates, amine oxides or combinations thereof.

6. The process of claim 3 wherein weight ratio of total adjuvant to sodium glyphosate is from about 1:9 to about 1:2 on a glyphosate acid equivalent basis.

7. The process of claim 1 wherein a portion of the adjuvant is added to the reactor to form the reaction mass such that the weight ratio of adjuvant to particulate glyphosate acid added to the reactor is at least about 1:250 on a glyphosate acid equivalent basis.

8. The process of claim 1 wherein a portion of the adjuvant is added to the reactor to form the reaction mass such that the weight ratio of adjuvant to particulate glyphosate acid added to the reactor is from about 1:250 to about 1:2 on a glyphosate acid equivalent basis.

9. The process of claim 1 wherein a portion of the adjuvant is added to the reactor to form the reaction mass such that the weight ratio of adjuvant to particulate glyphosate acid added to the reactor is from about 1:100 to about 1:50 on a glyphosate acid equivalent basis.

10. The process of claim 1 wherein the apertures in the screen have a diameter of from about 0.5 mm to about 2 mm.

11. The process of claim 1 further comprising classifying or milling the dried granules to remove or recycle granules, fragments of granules and aggregates of granules that are outside a desired size range.

12. The process of claim 1 wherein, if the moisture content of the sodium glyphosate paste on completion of the reaction is a greater than about 15% by weight, further comprising applying heat and/or vacuum to the paste to further reduce the moisture content of the paste prior to forming the extrudable sodium glyphosate mixture.

13. The process of claim 1 wherein the extrudable sodium glyphosate mixture is of a consistency such that, the extrudate strands break spontaneously upon extrusion through the screen to form the moist granules.

14. The process of claim 1 further comprises breaking or cutting the extrudate strands to form the moist granules.

15. The process of claim 1 further comprises rolling and/or tumbling the moist granules to impart to the granules a more spherical shape and greater uniformity of size.

## Patentansprüche

1. Kontinuierliches Verfahren zur Herstellung einer trockenen, granulären Natriumglyphosat-Zusammensetzung, welches Verfahren umfasst:
Kontinuierliches Zuführen von (i) teilchenförmiger Glyphosatsäure, (ii) Natriumhydroxid, (iii) Wasser und wahlweise (iv) einem Adjuvans in einen kontinuierlichen Reaktor, um eine Reaktionsmasse zu bilden, worin die Gesamtmenge an Wasser, welche zu der Reaktionsmasse zugesetzt wird, etwa 10 Gew.-% bis etwa 40 Gew.-% der Gesamtmenge an teilchenförmiger Glyphosatsäure, Natriumhydroxid und einem Adjuvans, welche zu dem Reaktor zugegeben werden, entspricht, und um **dadurch** die Glyphosatsäure und das Natriumhydroxid zur Reaktion zu bringen, wobei Wärme entsteht und eine Natriumglyphosat-Paste gebildet wird;
Verringern des Wassergehalts der Reaktionsmasse unter Ausnutzung der Wärme der Reaktion zwischen der Glyphosatsäure und des Natriumhydroxids, um eine partielle Verdampfung des Wassers zu bewirken, so dass die gebildete Natriumglyphosat-Pasre einen Feuchtigkeitsgehalt von etwa 2 Gew.-% bis etwa 20 Gew.-% aufweist;
Zugeben eines Adjuvans zu der Natriumglyphosat-Paste, um eine extrudierbare Natriumglyphosat-Mischung zu bilden, wobei das Gewichtsverhältnis des Adjuvans insgesamt zu dem Natriumglyphosat etwa 1:20 bis etwa 1:2 bezogen auf eine Glyphosatsäure-Äquivalentbasis beträgt;
Kontinuierliches Zuführen der extrudierbaren Natriumglyphosat-Mischung in eine Extrusionsvorrichtung, umfassend eine Einlassöffnung, ein Fördersystem und eine Austrittsöffnung mit einem Filtersieb, und Extrudieren der extrudierbaren Natriumglyphosat-Mischung durch Öffnungen in dem Filtersieb, um Extrudatstränge zu bilden, welche unter Bildung von feuchten, zusammenhängenden Granulaten zerbrechen; und
Trocknen der Granulate, um die trockene, granuläre Zusammensetzung herzustellen.

2. Verfahren nach Anspruch 1, wobei ein Teil des Adjuvans zu der Reaktionsmasse zugesetzt wird und der Rest des Adjuvans zu der Natriumglyphosat-Paste zugegeben wird.

3. Verfahren nach Anspruch 1, wobei das Adjuvans gewählt ist aus der Gruppe, bestehend aus nichtionischen Tensiden, kationischen Tensiden, anionischen Tensiden, amphoteren Tensiden, Silikon-Tensiden, Fluorkohlenwasserstoff-Tensiden, Gleitmitteln und Mischungen hiervon.

4. Verfahren nach Anspruch 3, wobei das Adjuvans ein kationisches Tensid ist.

5. Verfahren nach Anspruch 4, wobei das kationische Tensid gewählt ist aus der Gruppe, bestehend aus Alkylaminethoxylaten, quaternären Alkylaminaminen, Alkylaminacetaten, Aminoxiden oder Kombinationen hiervon.

6. Verfahren nach Anspruch 3, wobei das Gewichtsverhältnis des Adjuvans insgesamt zu dem Natriumglyphosat etwa 1:9 bis etwa 1:2 bezogen auf eine Glyphosatsäure-Äquivalentbasis beiträgt.

7. Verfahren nach Anspruch 1, wobei ein Teil des Adjuvans zu dem Reaktor zugegeben wird, um die Reaktionsmasse zu bilden, so dass das Gewichtsverhältnis des Adjuvans zu der teilchenförinigen Glyphosatsäure, welche in den Reaktor eingebracht wird, mindestens etwa 1:250 bezogen auf eine Glyphosatsäure-Äquivalentbasis beträgt.

8. Verfahren nach Anspruch 1, wobei ein Teil des Adjuvans zu dem Reaktor zugegeben wird, um die Reaktionsmasse zu bilden, so dass das Gewichtsverhältnis des Adjuvans zu der teilchenförmigen Glyphosatsäure, welche in den Reaktor eingebracht wird, etwa 1:250 bis etwa 1:2 bezogen auf eine Glyphosatsäure-Äquivalentbasis beträgt.

9. Verfahren nach Anspruch 1, wobei ein Teil des Adjuvans zu dem Reaktor zugegeben wird, um die Reaktionsmasse zu bilden, so dass das Gewichtsverhältnis des Adjuvans zu der teiichenformigen Glyphosatsäure, welche in den Reaktor eingebracht wird, etwa 1:100 bis etwa 1:50 bezogen auf eine Glyphosatsäure-Äquivalentbasis beträgt.

10. Verfahren nach Anspruch 1, wobei die Öffnungen in dem Filtersieb einen Durchmesser von etwa 0,5 mm bis etwa 2 mm aufweisen.

11. Verfahren nach Anspruch 1, welches weiterhin das Klassieren oder das Zerkleinern der getrockneten Granulate, um Granulate, Fragmente von Granulaten und Aggregate von Granulaten, welche außerhalb eines gewünschten Größenbereich liegen, zu entfernen oder der Wiederverwendung zuzuführen, umfasst.

12. Verfahren nach Anspruch 1, wobei das Verfahren, falls der Feuchtigkeitsgehalt der Natriumglyphosat-Paste nach Beendigung der Reaktion größer als etwa 15 Gew.-% ist, weiterhin die Anwendung von Wärme und/oder Unterdruck auf die Paste, um den Feuchtigkeitsgehalt der Paste vor Bildung der extrudierbaren Natriumglyphosat-Mischung weiter zu verringern, umfasst.

13. Verfahren nach Anspruch 1, wobei die extrudierbare Natriumglyphosat-Mischung eine derartige Konsistenz aufweist, dass die Extrudatstränge bei der Extrusion durch das Filtersieb spontan zerbrechen, um die feuchten Granulate zu bilden.

14. Verfahren nach Anspruch 1, welches weiterhin das Zerkleinern oder das Zerteilen der >rxtrudatstrfinge, um die feuchten Granulate zu bilden, umfaßt.

15. Verfahren nach Anspruch 1, welches weiterhin das Aussetzen der feuchten Granulate einer Roll- und/oder Taumelbewegung, um den Granulaten eine kugelförmigere Form und eine größer Einheitlichkeit hinsichtlich der Größe zu verleihen, umfasst.

## Revendications

1. Procédé en continu de préparation d'une composition de glyphosate de sodium granulaire sèche, le procédé comprenant :
l'alimentation en continu (i) d'acide de glyphosate particulaire, (ii) d'hydroxyde de sodium, (iii) d'eau et facultativement (iv) d'un adjuvant dans un réacteur en continu pour former une masse réactionnelle, dans lequel la quantité totale d'eau ajoutée à la masse réactionnelle est d'environ 10% à environ 40% en poids de la totalité de l'acide de glyphosate particulaire, de l'hydroxyde de sodium, de l'eau et d'un quelconque adjuvant ajoutés dans le réacteur, causant ainsi une réaction de l'acide de glyphosate et de l'hydroxyde de sodium qui génère de la chaleur et forme une pâte de glyphosate de sodium ;
la réduction de la teneur en eau de la masse réactionnelle en utilisant la chaleur de réaction de l'acide de glyphosate et de l'hydroxyde de sodium pour causer une évaporation partielle de l'eau, de telle sorte que la pâte de glyphosate de sodium formée a une teneur en humidité d'environ 2% à environ 20% en poids ;
l'adjonction d'un adjuvant à la pâte de glyphosate de sodium pour former un mélange de glyphosate de sodium extrudable, le rapport en poids de l'adjuvant total sur le glyphosate de sodium étant d'environ 1:20 à environ 1:2 sur une base d'équivalent acide de glyphosate ;
l'alimentation en continu du mélange de glyphosate de sodium extrudable dans une extrudeuse ayant une entrée, un transporteur et une sortie ayant un écran et l'extrusion du mélange de glyphosate de sodium extrudable à travers des ouvertures dans l'écran pour former des brins d'extrudat qui se cassent pour former des granulés cohérents humides ; et
le séchage des granulés pour produire la composition granulaire sèche.

2. Procédé selon la revendication 1 dans lequel une partie de l'adjuvant est ajoutée à la masse réactionnelle et le reste de l'adjuvant est ajouté à la pâte de glyphosate de sodium.

3. Procédé selon la revendication 1 dans lequel l'adjuvant est choisi parmi un groupe consistant en des agents tensioactifs non ioniques, des agents tensioactifs cationiques, des agents tensioactifs anioniques, des agents tensioactifs amphotères, des agents tensioactifs silicone, des agents tensioactifs fluorocarbure, des lubrifiants et des mélanges de ceux-ci.

4. Procédé selon la revendication 3 dans lequel l'adjuvant est un agent tensioactif cationique.

5. Procédé selon la revendication 4 dans lequel l'agent tensioactif cationique est choisi parmi un groupe consistant en des éthoxylates d'alkylamine, des alkylamine amines quaternaires, des acétates d'alkylamine, des oxydes d'amine ou des combinaisons de ceux-ci.

6. Procédé selon la revendication 3 dans lequel le rapport en poids de l'adjuvant total sur le glyphosate de sodium est d'environ 1:9 à environ 1:2 sur une base d'équivalent acide de glyphosate.

7. Procédé selon la revendication 1 dans lequel une partie de l'adjuvant est ajoutée dans le réacteur pour former la masse réactionnelle de telle sorte que le rapport en poids de l'adjuvant sur l'acide de glyphosate particulaire ajouté dans le réacteur est au moins environ 1:250 sur une base d'équivalent acide de glyphosate.

8. Procédé selon la revendication 1 dans lequel une partie de l'adjuvant est ajoutée dans le réacteur pour former la masse réactionnelle de telle sorte que le rapport en poids de l'adjuvant sur l'acide de glyphosate articulaire ajouté dans le réacteur est d'environ 1:250 à environ 1:2 sur une base d'équivalent acide de glyphosate.

9. Procédé selon la revendication 1 dans lequel une partie de l'adjuvant est ajoutée dans le réacteur pour former la masse réactionnelle de telle sorte que le rapport en poids de l'adjuvant sur l'acide de glyphosate particulaire ajouté dans le réacteur est d'environ 1:100 à environ 1:50 sur une base d'équivalent acide de glyphosate.

10. Procédé selon la revendication 1 dans lequel les ouvertures dans l'écran ont un diamètre d'environ 0,5 mm à environ 2 mm.

11. Procédé selon la revendication 1 comprenant en outre le tri ou le broyage des granulés séchés pour éliminer ou recycler des granulés, des fragments de granulés et des agrégats de granulés qui sont hors d'une plage de tailles désirée.

12. Procédé selon la revendication 1 dans lequel, si la teneur en humidité de la pâte de glyphosate de sodium à la fin de la réaction est supérieure à environ 15% en poids, comprenant en outre l'application de chaleur et/ou de vide à la pâte pour réduire encore la teneur en humidité de la pâte avant la formation du mélange de glyphosate de sodium extrudable.

13. Procédé selon la revendication 1 dans lequel le mélange de glyphosate de sodium extrudable est d'une consistance telle que les brins d'extrudat se brisent spontanément à l'extrusion à travers l'écran pour former les granulés humides.

14. Procédé selon la revendication 1 comprenant en outre la rupture ou le découpage des brins d'extrudat pour former les granulés humides.

15. Procédé selon la revendication 1 comprenant en outre le roulage et/ou le tonnelage des granulés humides pour impartir aux granulés une forme plus sphérique et une plus grande uniformité de taille.
